# EUROPÄISCHE PATENTSCHRIFT

(11) **EP 2 411 320 B1**
(45) Veröffentlichungstag und Bekanntmachung des Hinweises auf die Patenterteilung: **08.05.2013**
(21) Anmeldenummer: 09801168.7
(22) Anmeldetag: 18.12.2009
(51) Int. Cl.: B65G 47/84, B65G 29/00, B08B 9/32, B08B 17/00, B67C 3/24, B67C 7/00

(54) **TRANSPORTSTERN MIT ANTRIEB ZUM EINBAU IN FLASCHENBEHANDLUNGSANLAGEN**
STAR WHEEL HAVING A DRIVE FOR INSTALLATION IN BOTTLE HANDLING SYSTEMS
ÉTOILE DE TRANSPORT À SYSTÈME D'ENTRAÎNEMENT DESTINÉE À ÊTRE MONTÉE DANS DES INSTALLATIONS DE TRAITEMENT DE BOUTEILLES

(30) Priorität: 26.03.2009 DE 102009014405
(43) Veröffentlichungstag der Anmeldung: 01.02.2012
(73) Patentinhaber: KHS GmbH, 44143 Dortmund (DE)
(72) Erfinder: FAHLDIECK, Andreas, 55743 Idar-Oberstein (DE)
(86) Internationale Anmeldenummer: PCT/EP2009/009114
(87) Internationale Veröffentlichungsnummer: WO 2010/108531

(56) Entgegenhaltungen:
- EP-A1- 1 050 508
- EP-A1- 1 281 661
- EP-A1- 1 342 678
- WO-A1-2008/129347
- DE-A1- 10 247 362
- FR-A1- 2 867 171
- US-A1- 2002 081 189

## Beschreibung

Die Erfindung richtet sich auf einen Transportstern mit Antrieb zum Einbau in Flaschenabfüttanlagen od. dgl. der im Oberbegriff des Anspruches 1 angegebenen Gattung. Ein solcher Transportstern ist aus EP 1 281 661 A1 bekannt.

Transportsterne mit einer Vielzahl von am Umfang angeordneten Greifern sind auch bekannt aus EP 1 342 678 A1.

In Flaschenabfüllanlagen, in entsprechenden Spülenlagen u. dgl. gibt es eine Reihe von Transportsternen, mit denen die Flaschen von einer Position in eine andere gefördert werden, so z.B. als Stern im Nassteil für leere PET-Flaschen, in Rinsern, in Füllern bei drucklosen Füllungen, in Direktverblockungsanlagen mit Stern nach einer Blasmaschine u. dgl. Hier ist man bemüht, die Konstruktion so zu gestalten, dass ein hygienisch einwandfreier Betrieb möglich ist. d.h., dass insbesondere alle Maschinenelemente leicht gereinigt werden können und gegen Verschmutzung möglichst unanfällig sind.

Ziel der vorliegenden Erfindung ist es daher, eine möglichst hygienische Ausführung dieser entsprechenden, hier zum Einsatz kommenden Maschinenteile bereitzustellen.

Mit einem Transportstern der eingangs bezeichneten Art wird diese Aufgabe gemäß der Erfindung dadurch gelöst, dass der Stern die Merkmale des kennzeichnenden Teils des Anspruchs 1 aufweist.

Die kegelige Gestaltung des sternfixierenden Tellers hat eine Fülle von Vorteilen, da waagerechten Flächen minimiert werden. Die Gestaltung kann dabei so getroffen werden, dass auch schwierig zu reinigende Ecken und Kanten vermieden werden.

Ausgestaltungen der Erfindung ergeben sich aus den Unteransprüchen.

Dabei kann vorgesehen sein, dass der zentrische kegelige Teller mit einer zentrischen Durchgangsschraube an dem Antriebselement befestigt ist. Mit der zentrischen kegeligen Zentralbefestigung mit nur einer Schraube ist auch der Montageaufwand deutlich geringer als bei bisher eingesetzten Systemen.

Der Teller ist erfindungsgemäß mit einer verdeckten Verdrehsicherung am Antriebselement fixiert. Auch dies führt zu einem einfachen Aufbau und einer einfachen Montage bei einer geringen Anzahl von Bauteilen.

Die Erfindung sieht auch vor, dass zwischen Teller und Tragteil am Antrieb eine metallische Dichtung vorgesehen ist, wobei in zusätzlicher Ausgestaltung nach der Erfindung vorgesehen sein kann, dass wenigstens der kegelige Teller mit einer keimhemmenden Oberfläche, wie beispielsweise einer silber- oder kupferhaltigen Beschichtung, ausgerüstet ist.

Schließlich sieht die Erfindung auch vor, dass die radialen Stege mit je zwei glatten, nach unten weisenden Bolzen ausgerüstet sind, die als Träger von Clipsen dienen. Mit dieser Gestaltung wird erreicht, dass eine gut reinigbare Befestigung am Stern ohne Dreckecken bereitgestellt wird, die Clipse am Stern können dabei so positioniert werden, dass der Stern auch mit den Clipsen spülbar ist.

Besonders vorteilhaft ist eine Variante, bei welcher der Stern in Form eines Trägerrades mindestens einen Ring und mehrere Speichen aufweist bzw. der Ring ein über Stege verbundener Doppelring ist. An dem mindestens einen äußeren Ring bzw. an den Stegen des Doppelrings, sind die Halteclipse für den Transport der Behälter oder Flaschen befestigt. Dabei wird dieses Rad über den zentralen Teller und die die Verdrehsicherung gehalten und fixiert. Der besondere Vorteil besteht darin, dass ein derartiger Stern nur eine sehr geringe Oberfläche aufweist, auf der Flüssigkeit anhaften und verbleiben kann. Auf der anderen Seite kann das Rad aus einem Stück sehr einfach und kostengünstig mittels eines physikalischen- oder mechanischen Schneidverfahren hergestellt werden. Dieser Stern bzw. das Rad kann dahingehend verbessert werden, dass möglichst viele Öffnungen im Bereich der Speichen oder des mindestens einen Rades vorgesehen werden, soweit die mechanisch-statischen Erfordernisse dies zulassen.

Weitere Einzelheiten, Merkmale und Vorteile der Erfindung ergeben sich aufgrund der nachfolgenden Beschreibung sowie anhand der Zeichnung. Diese zeigt in
- Fig. 1: eine räumliche Darstellung des erfindungsgemäßen Transportstern mit eingebauten Clipsen sowie in
- Fig. 2: eine Schnittzeichnung etwa gemäß Linie II-II in Fig. 1.

Der in den Figuren teilweise vereinfacht dargestellte Transportstern, allgemein mit 1 bezeichnet, ist an einem lediglich gestrichelt angedeuten Antrieb 2 einer entsprechenden Maschine an einem Antriebselement 3 mittels eines kegelig gestalteten Tellers 4 fixiert. Der Teller 4 ist nur mit einer zentrischen Schraube, allgemein mit 5 bezeichnet, am Antriebselement 3 befestigt. Zwischen dem Antriebselement 3 und dem Teller 4 ist eine verdeckte Verdrehungssicherung 6 sowie ein eine Dichtung oder eine Dichtung ersetzender metallischer Ring 7 vorgesehen.

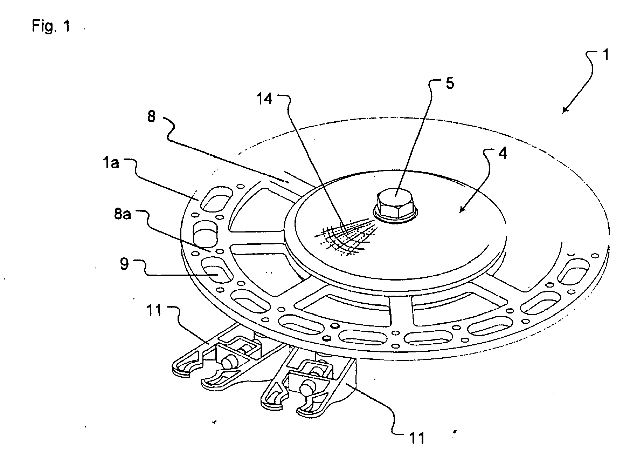

Wie sich insbesondere aus Fig. 1 ergibt, weist der Stern 1 wenigstens einen Außenring 1a auf, der mittels Speichen 8 am Innenbereich fixiert ist und mit einer Vielzahl von Langlöchern 9 versehen ist, zwischen denen speichenartige Stege 8a ausgebildet sind.

Auf seiner Unterseite sind an den Stege 8a zwischen den Ausnehmungen 9 nach unten weisende Bolzen, allgemein mit 10 bezeichnet, vorgesehen, die paarweise der Fixierung und Zentrierung von in den Figuren wiederum nur angedeuteten Halteclipsen 11 für nicht näher dargestellte Flaschen dienen.

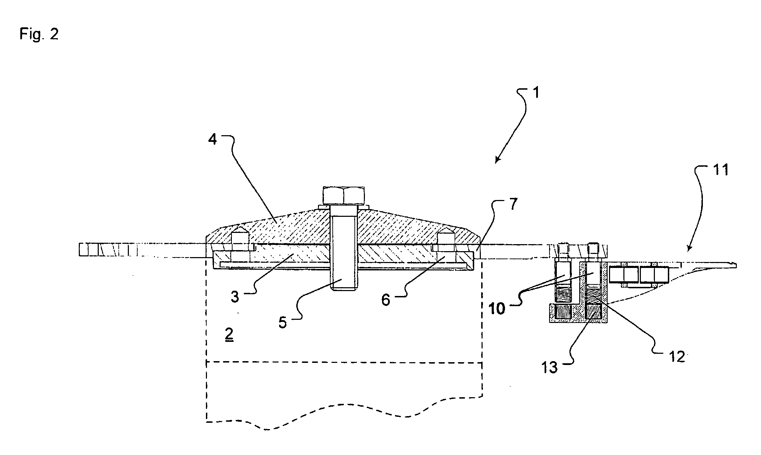

Erkennbar besteht der erfindungsgemäße Transportstern aus wenigen leicht zu reinigenden Elementen, die ebenfalls leicht zu montieren sind. Dies gilt im Übrigen auch für die Clipse 11, da die am Stern 1 befestigten Bolzen 10 mit Magneten ausgerüstet sind, die mit entsprechenden gegengepolten Magneten am oder in den Clipsen zusammenwirken. Dieses jeweils miteinander korrespondierende Magnetpaar ist in Fig. 2 mit 12 und 13 bezeichnet.

In Fig. 1 ist noch angedeutet, dass die Oberfläche wenigstens des der Fixierung dienenden leicht zentrischen Tellers 4 mit einer keimhemmenden Beschichtung, allgemein mit 14 bezeichnet, ausgerüstet sein kann, wie beispielsweise einer aufgedampften Silberbeschichtung od. dgl.

Natürlich ist das beschriebene Ausführungsbeispiel der Erfindung noch in vielfacher Hinsicht abzuändern, ohne den Grundgedanken zu verlassen. So kann der Stern auch eine etwas andere Gestaltung aufweisen, wesentlich ist, dass er leicht zu reinigen und leicht zu montieren ist.

## Patentansprüche

1. Transportstern mit Antrieb zum Einbau in Flaschenabfüllanlagen od. dgl., insbesondere im Nassteil für leere PET-Flaschen, wobei der Stern mit nach außen weisenden Speichen (8) ausgerüstet ist, die mindestens einen Stege Ring tragen, **dadurch gekennzeichnet, dass** der Stern (1) einen zentrischen, kegeligen, von einer Schraube (5) fixierten Teller (4) aufweist, wobei der Teller (4) eine kegelige Gestaltung hat und mit einer verdeckten Verdrehsicherung am Antriebselement fixiert Ist.

2. Transportstern nach Anspruch 1, **dadurch gekennzeichnet, dass** radialen Stege (8a) am Stern (1) mit je zwei glatten, nach unten weizenden Bolzen (10) ausgerüstet sind, die als Träger von Clipsen (11) dienen.

3. Transportstern nach Anspruch 1 oder 2, **dadurch gekennzeichnet, dass** wenigstens der kegelige Teller (4) mit einer keimhemmenden Oberfläche, wie beispielsweise einer silber- oder kupferhaltigen Beschichtung (14), ausgerüstet ist.

4. Transportstern nach einem der vorangehenden Ansprüche, **dadurch gekennzeichnet, dass** der zentrische kegelige Teller (4) mit einer zentrischen Durchgangsschraube (5) an dem Antriebselement (3) befestigt ist.

5. Transportstern nach einem der vorangehenden Ansprüche, **dadurch gekennzeichnet, dass** zwischen Teller (4) und Tragteil am Antrieb (3) eine Dichtung (7) vorgesehen ist, wobei die Dichtung insbesondere eine metallische Dichtung (7) Ist.

6. Transportstern nach einem der vorangehenden Ansprüche, **dadurch gekennzeichnet, dass** die Speichen (8) mindestens einen ersten Ring und eine über eine Mehrzahl von radialen Stegen (8a) verbundenen zweiten Ring (1a) tragen.

7. Transportstern nach einem der vorangehenden Ansprüche, **dadurch gekennzeichnet, dass** der mindestens eine über eine Mehrzahl von radialen Speichen (B) verbundene Ring eine Mehrzahl von Öffnungen oder Materialausnehmungen aufweist.

8. Transportstern nach einem der vorangehenden Ansprüche, **dadurch gekennzeichnet, dass** die radialen Stege eine oder mehrere Öffnungen oder Materialausnehmungen aufweist.

9. Transportstern nach einem der vorangehenden Ansprüche, **dadurch gekennzeichnet, dass** der mindesten eine Ring und die Mehrzahl von Speichen und/oder Stege Teile eines Trägerrades darstellen, das weiterhin einen zentralen Haltebereich oder Ring aufweist, welcher im eingebauten Zustand von dem zentralen Teller mindestens teilweise überdeckt wird.

10. Transportstern nach Anspruch 9, **dadurch gekennzeichnet, dass** das Trägerrad aus einem Stück besteht bzw. aus einem Stück gefertigt werden kann, und insbesondere keine Löt-oder Schweißverbindungen aufweist.

## Claims

1. Star wheel having a drive, for installation in bottle filling systems or the like, in particular in the wet area for empty PET bottles, wherein the star wheel is equipped with outwardly pointing spokes (8) that carry at least one ring, **characterised in that** the star wheel (1) comprises a centric, cone-shaped plate (4) attached by means of a screw (5), wherein the plate (4) is cone-shaped and is attached to the drive element by a concealed anti-rotation means.

2. Star wheel according to claim 1, **characterised in that** radial webs (8a) on the star wheel (1) are each equipped with two smooth, downwardly pointing bolts (10) that serve as supports for clips (11).

3. Star wheel according to claim 1 or 2, **characterised in that** at least the cone-shaped plate (4) is equipped with a bacteriostatic surface, such as for example a silver-containing or copper-containing coating (14).

4. Star wheel according to any one of the preceding claims, **characterised in that** the centric, cone-shaped plate (4) is fastened to the drive element (3) by means of a centric through-screw (5).

5. Star wheel according to any one of the preceding claims, **characterised in that** a seal (7) is provided between the plate (4) and the support part on the drive (3), wherein the seal is in particular a metal seal (7).

6. Star wheel according to any one of the preceding claims, **characterised in that** the spokes (8) carry at least a first ring and a second ring (1a) that is connected via a plurality of radial webs (8a).

7. Star wheel according to any one of the preceding claims, **characterised in that** the at least one ring connected via a plurality of radial spokes (8) has a plurality of openings or material cutouts.

8. Star wheel according to any one of the preceding claims, **characterised in that** the radial webs have one or more openings or material cutouts.

9. Star wheel according to any one of the preceding claims, **characterised in that** the at least one ring and the plurality of spokes and/or webs form part of a carrier wheel which further comprises a central holding area or ring that is at least partially covered by the central plate in the installed state.

10. Star wheel according to claim 9, **characterised in that** the carrier wheel consists of one piece or is manufactured from one piece, and in particular has no soldered or welded joins.

## Revendications

1. Dispositif de transport en étoile comprenant un entraînement, destiné à être installé dans des installations de mise en bouteilles ou similaire, en particulier dans la partie humide pour des bouteilles en PET vides, sachant que l'étoile est pourvue de rayons (8) orientés vers l'extérieur, lesquels supportent au moins un anneau à traverses, **caractérisé en ce que** l'étoile (1) présente un plateau (4) central, conique et fixé par une vis (5), sachant que le plateau (4) présente une forme conique et est fixé au niveau de l'élément d'entraînement par un dispositif de blocage empêchant toute rotation et doté d'un cache.

2. Dispositif de transport en étoile selon la revendication 1, **caractérisé en ce que** des traverses (8a) radiales sur l'étoile (1) sont pourvues de respectivement deux boulons (10) lisses, orientés vers le bas, lesquels font office de supports de clips (11).

3. Dispositif de transport en étoile selon la revendication 1 ou 2, **caractérisé en ce qu'**au moins le plateau (4) conique est pourvu d'une surface germicide, telle que par exemple un revêtement (14) contenant de l'argent ou du cuivre.

4. Dispositif de transport en étoile selon l'une quelconque des revendications précédentes, **caractérisé en ce que** le plateau (4) central conique est fixé par une vis de passage (5) centrale à l'élément d'entraînement (3).

5. Dispositif de transport en étoile selon l'une quelconque des revendications précédentes, **caractérisé en ce qu'**un joint d'étanchéité (7) est prévu entre le plateau (4) et la partie de support au niveau de l'entraînement (3), sachant que le joint d'étanchéité est en particulier un joint d'étanchéité (7) métallique.

6. Dispositif de transport en étoile selon l'une quelconque des revendications précédentes, **caractérisé en ce que** les rayons (8) supportent au moins un premier anneau et un deuxième anneau (1a) relié par l'intermédiaire d'une pluralité de traverses (8a) radiales.

7. Dispositif de transport en étoile selon l'une quelconque des revendications précédentes, **caractérisé en ce que** l'anneau au moins au nombre de un relié par l'intermédiaire d'une pluralité de rayons (8) radiaux présente une pluralité d'ouvertures ou d'évidements de matériau.

8. Dispositif de transport en étoile selon l'une quelconque des revendications précédentes, **caractérisé en ce que** les traverses radiales présentent une ou plusieurs ouvertures ou un ou plusieurs évidements de matériau.

9. Dispositif de transport en étoile selon l'une quelconque des revendications précédentes, **caractérisé en ce que** l'anneau au moins au nombre de un et la pluralité de rayons et/ou de traverses constituent des parties d'une roue de support, laquelle présente en outre une zone centrale de maintien ou un anneau, laquelle/lequel est recouvert au moins en partie à l'état monté par le plateau central.

10. Dispositif de transport en étoile selon la revendication 9, **caractérisé en ce que** la roue de support est constituée d'une pièce ou peut être fabriquée à partir d'une pièce, et **en ce qu'**elle ne présente notamment aucune jonction par brasage ou par soudage.
